# EUROPÄISCHE PATENTSCHRIFT

(11) **EP 3 720 633 B1**
(45) Veröffentlichungstag und Bekanntmachung des Hinweises auf die Patenterteilung: **17.08.2022**
(21) Anmeldenummer: 18833152.4
(22) Anmeldetag: 24.11.2018
(51) Int. Cl.: B22F 10/28, B22F 10/322, B22F 12/70, B29C 64/153, B29C 64/20, B29C 64/371, B33Y 10/00, B33Y 30/00, B33Y 50/02, B22F 12/00, B29C 64/227

(54) **SCHICHTBAUVORRICHTUNG ZUR ADDITIVEN HERSTELLUNG ZUMINDEST EINES BAUTEILBEREICHS EINES BAUTEILS UND VERFAHREN ZUM BETREIBEN EINER SCHICHTBAUVORRICHTUNG**
LAYERING MANUFACTURING APPARATUS FOR ADDITIVE MANUFACTURING AT LEAST A PORTION OF A COMPONENT AND OPERATION METHOD THEREOF
DISPOSITIF DE FABRICATION MULTICOUCHE POUR LA FABRICATION ADDITIVE D'AU MOINS UNE PARTIE D'UN COMPOSANT ET SON PROCÉDÉ DE FONCTIONNEMENT

(30) Priorität: 05.12.2017 DE 102017221909
(43) Veröffentlichungstag der Anmeldung: 14.10.2020
(73) Patentinhaber: MTU Aero Engines AG, 80995 München (DE)
(72) Erfinder: JAKIMOV, Andreas, 85777 Fahrenzhausen (DE); ROTT, Sebastian, 81675 München (DE); RAU, Christoph, 82194 Gröbenzell (DE); JAKIMOV, Nicole, 85777 Fahrenzhausen (DE); LADEWIG, Alexander, 83707 Bad Wiessee (DE)
(86) Internationale Anmeldenummer: PCT/DE2018/000349
(87) Internationale Veröffentlichungsnummer: WO 2019/110029

(56) Entgegenhaltungen:
- DE-A1-102010 052 206
- DE-A1-102015 110 264
- DE-A1-102015 121 748
- DE-A1-102015 222 456

## Beschreibung

Bauteilbereichs eines Bauteils sowie ein Verfahren zum Betreiben einer solchen Schichtbauvorrichtung. Bei so genannten additiven bzw. generativen Fertigungsverfahren (sog. Rapid Manufacturing- bzw. Rapid Prototyping-Verfahren) wird ein Bauteilbereich bzw. ein vollständiges Bauteil, bei dem es sich beispielsweise um ein Bauteil einer Strömungsmaschine bzw. eines Flugtriebwerks handeln kann, schichtweise aufgebaut. Vorwiegend metallische Bauteile werden in der Regel durch Laser- bzw. Elektronenstrahlschmelz- oder -sinterverfahren hergestellt. Dabei wird zunächst mittels eines Beschichters schichtweise mindestens ein pulverförmiger Werkstoff im Bereich einer Aufbau- und Fügezone aufgetragen, um eine Pulverschicht zu bilden. Anschließend wird der Bauteilwerkstoff lokal verfestigt, indem dem Werkstoff im Bereich der Aufbau- und Fügezone Energie mittels wenigstens eines Energiestrahls zugeführt wird, wodurch der Werkstoff schmilzt bzw. sintert und eine Bauteilschicht bildet. Der Energiestrahl wird dabei in Abhängigkeit einer Schichtinformation der jeweils herzustellenden Bauteilschicht gesteuert. Die Schichtinformationen werden üblicherweise aus einem 3D-CAD-Körper des Bauteils erzeugt und in einzelne Bauteilschichten unterteilt. Nach dem Verfestigen des geschmolzenen oder versinterten Werkstoffs wird die Bauplattform schichtweise um eine vordefinierte Schichtdicke abgesenkt. Danach werden die genannten Schritte bis zur endgültigen Fertigstellung des gewünschten Bauteilbereichs oder des gesamten Bauteils wiederholt. Der Bauteilbereich bzw. das Bauteil kann dabei beispielsweise auf einer absenkbaren Bauplattform und/oder auf einem bereits erzeugten Teil des Bauteils oder Bauteilbereichs bzw. auf einer Stützstruktur hergestellt werden. Die Vorteile dieser additiven Fertigung liegen insbesondere in der Möglichkeit, sehr komplexe Bauteilgeometrien mit Hohlräumen, Hinterschnitten und dergleichen im Rahmen eines einzelnen Verfahrens herstellen zu können.

Als problematisch bei diesen Schichtbauverfahren ist der Umstand anzusehen, dass sich häufig Zonen mit Verwirbelungen der Pulverschicht oder Staub sowie sonstige Verunreinigungen wie etwa Kondensat, Rauch oder Spratzer bilden, die sich unkontrolliert auf dem Baufeld, auf aufgeschmolzenem Pulver oder auf bereits verfestigten Bereichen der Bauteilschicht ablagern. Dies führt zu entsprechenden Verunreinigungen, Einschlüssen und Prozessstörungen und damit letztlich zu einer Verminderung der Bauteilqualität.

Aus der DE 10 2015 117 238 A1 ist es daher beispielsweise bekannt, eine Strömungseinrichtung vorzusehen, mittels welcher ein Fluidstrom erzeugt werden kann, um den Bereich der Pulverschicht beispielsweise mit einem Schutzgas oder Kühlmittel zu beaufschlagen.

DE 10 2010 052 206 A1; DE 10 2015 110 264 A1 und DE 10 2015 222 456 A1 zeigen Schichtbauvorrichtungen, in denen ein Schutzgasstrom mittels Ablenkelementen umgeleitet wird.

DE 10 2015 222 456 A1 offenbart eine Vorrichtung ähnlich der aus DE 10 2015 117 238 A1, bei der ein Schutzgasstrom nach dem Eintritt in den Bauraum durch einen Diffusor entwirbelt wird. DE102015121748 A1 offenbart eine Vorrichtung, bei der ein Schutzgasstrom nach dem Eintritt durch einen Diffusor geleitet wird, der senkrecht zur Strömungsrichtung ausgerichtet ist.

Als nachteilig an den bekannten Strömungseinrichtungen ist der Umstand anzusehen, dass der Fluidstrom einen Freistrahl darstellt, welcher nach dem Austritt aus einer Austrittsöffnung der Strömungseinrichtung unkontrolliert fließt. Hierdurch kann es zu einer Aufwirbelung des pulverförmigen Werkstoffs sowie zur unkontrollierten Verteilung von Staub, Kondensat, Rauch, Spratzern und dergleichen kommen, was zu einer schlechteren Bauteilqualität führen kann.

Aufgabe der vorliegenden Erfindung ist es, eine prozesssicherere additive Herstellung von Bauteilschichten eines Bauteils mit höherer Qualität zu ermöglichen.

Die Aufgaben werden erfindungsgemäß durch eine Schichtbauvorrichtung mit den Merkmalen des Patentsanspruchs 1 sowie durch ein Verfahren gemäß Patentanspruch 8 zum Betreiben einer solche Schichtbauvorrichtung gelöst. Vorteilhafte Ausgestaltungen mit zweckmäßigen Weiterbildungen der Erfindung sind in den Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft eine Schichtbauvorrichtung zur additiven Herstellung zumindest eines Bauteilbereichs eines Bauteils durch ein additives Schichtbauverfahren. Die Schichtbauvorrichtung umfasst mindestens einen Beschichter zum Auftrag von mindestens einer Pulverschicht eines Werkstoffs auf eine Aufbau- und Fügezone, mindestens eine Strahlungsquelle zum Erzeugen wenigstens eines Energiestrahls zum schichtweisen und lokalen Verschmelzen und/oder Versintern des Werkstoffs zum Ausbilden einer Bauteilschicht durch selektives Bestrahlen des Werkstoffs mit dem wenigstens einem Energiestrahl gemäß einer vorbestimmten Belichtungsstrategie und eine Strömungseinrichtung, mittels welcher ein Fluidstrom über der Pulverschicht erzeugbar ist, die hierzu eine düsenartige Auslassöffnung und eine gegenüber der Auslassöffnung angeordnete Einlassöffnung für das Fluid aufweist, zwischen welchen der Fluidstrom erzeugt wird. Eine prozesssicherere additive Herstellung von Bauteilschichten eines Bauteils mit höherer Qualität wird erfindungsgemäß dadurch ermöglicht, dass die Schichtbauvorrichtung zusätzlich wenigstens eine Strömungsleiteinrichtung aufweist, welche mindestens ein Leitelement zum Leiten des Fluidstroms über zumindest einen Bereich der Pulverschicht umfasst. Das mindestens eine Leitelement der Strömungsleiteinrichtung ist innerhalb einer Prozesskammer der Schichtbauvorrichtung angeordnet und die Strömungsleiteinrichtung umfasst eine steuer- und/oder regelbare Antriebseinrichtung, mittels welcher das mindestens eine Leitelement relativ zur Pulverschicht bewegt wird, wenn es während des Auftrags einer neuen Pulverschicht im Verfahrweg des Beschichters steht. Außerdem ist das mindestens eine Leitelement wand- bzw. plattenartig ausgebildet, wobei das mindestens eine Leitelement senkrecht zur Pulverschicht ausgerichtet ist und wobei die Leitfläche des mindestens einen Leitelements parallel zum Fluidstrom angeordnet ist. Generell sind "ein/eine" im Rahmen dieser Offenbarung als unbestimmte Artikel zu lesen, also ohne ausdrücklich gegenteilige Angabe immer auch als "mindestens ein/mindestens eine". Umgekehrt können "ein/eine" auch als "nur ein/nur eine" verstanden werden. Eine derartige Strömungsleiteinrichtung erlaubt eine verbesserte Kontrolle und Strömungsführung des Fluidstroms. Mit Hilfe des mindestens einen Leitelements ist es damit beispielsweise möglich, den Fluidstrom bedarfsweise zu homogenisieren, zu richten bzw. umzulenken und/oder zu zerstäuben. Dies ermöglicht eine prozesssicherere additive Herstellung von Bauteilschichten eines Bauteils mit höherer Qualität. Das Leitelement ist erfindungsgemäß wandartig, das heißt flach, rechtwinklig und eben ausgebildet.

Dies erlaubt es, die Pulverschicht bzw. die verfestigte Bauteilschicht gezielt mit einem gewünschten Fluid, beispielsweise einem Schutz- und/oder Kühlgas, zu beaufschlagen und/oder zu um- bzw. überströmen, um eine zielgerichtete Abführung von verwirbeltem Werkstoffpulver, Staub, Kondensat, Rauch, Spratzern und dergleichen sicherzustellen. Das Schutzgas kann Argon und/oder ein anderes Edelgas bzw. Edelgasgemisch (He, Ne, Kr, Xe) umfassen oder sein. Vorzugsweise weist das Schutzgas möglichst geringe Verunreinigungen an Sauerstoff, Stickstoff, Wasserstoff und Wasser(dampf) auf. Unter einer möglichst geringen Verunreinigung werden jeweils Gehalte von höchstens 20 ppm, insbesondere von höchstens 10 ppm oder weniger verstanden. Die Schichtbauvorrichtung kann grundsätzlich als selektive Lasersinter- und/oder Laserschmelzvorrichtung ausgebildet sein und einen oder mehrere Laser als Strahlungsquelle(n) aufweisen. Zur Erzeugung eines Laserstrahls kann beispielsweise ein CO₂-Laser, Nd:YAG-Laser, Yb-Faserlaser, Diodenlaser oder dergleichen vorgesehen sein. Ebenso ist es möglich, dass die Schichtbauvorrichtung als Elektronenstrahlsinter- und/oder -schmelzvorrichtung ausgebildet ist, das heißt eine oder mehrere Elektronenquellen als Strahlungsquelle(n) aufweist. Auch beliebige Kombinationen sind denkbar. In Abhängigkeit des verwendeten Werkstoffs und der Belichtungsstrategie kann es beim Belichten bzw. Bestrahlen zu einem Aufschmelzen und/oder zu einem Versintern des Werkstoffpulvers kommen, so dass im Rahmen der vorliegenden Erfindung unter dem Begriff "Verschweißen" auch "Versintern" und umgekehrt verstanden werden kann.

Erfindungsgemäß ist das Leitelement relativ zur Pulverschicht bewegbar. Die Bewegung des Leitelements kann dabei grundsätzlich vor, während und/oder nach dem Verfestigen einer Bauteilschicht erfolgen. Erfindungsgemäß kann das Leitelement bewegt werden, wenn es gegenwärtig nicht benötigt wird, wenn es während des Auftrags einer neuen Pulverschicht im Verfahrweg des Beschichters oder im Verfahrweg eines anderen bewegten Bauteils der Schichtbauvorrichtung steht oder wenn es sich im Belichtungspfad des Energiestrahls befindet. Hierdurch kann auch sichergestellt werden, dass der additive Herstellungsprozess nicht gestört wird.

Eine einfache Bewegbarkeit des mindestens einen Leitelements wird gemäß der Erfindung dadurch erreicht, dass die Strömungsleiteinrichtung eine steuer- und/oder regelbare Antriebseinrichtung umfasst, mittels welcher das mindestens eine Leitelement relativ zur Pulverschicht bewegbar ist. Mit anderen Worten ist es vorgesehen, dass das Leitelement oder die Leitelemente mit Hilfe einer Antriebseinrichtung bewegbar ist bzw. sind, wobei die Antriebseinrichtung steuerbar und/oder regelbar ausgebildet ist. Hierdurch ist eine automatisierbare und prozessabhängige Bewegbarkeit des oder der Leitelemente möglich.

Dabei hat es sich in weiterer Ausgestaltung als vorteilhaft gezeigt, wenn die Antriebseinrichtung elektrisch, pneumatisch, mechanisch, magnetisch und/oder hydraulisch betätigbar ist. Hierdurch kann die Bewegbarkeit des mindestens einen Leitelements besonders flexibel realisiert werden.

Beispielsweise kann die Bewegung des Leitelements oder der Leitelemente elektrisch, das heißt mit Hilfe von einem oder mehreren Elektromotoren, pneumatisch, das heißt durch den Einsatz von unter Druck stehendem Gas, mechanisch, beispielsweise durch einen Schwerkraftantrieb, durch das Eigengewicht des wenigstens einen Leitelements, durch eine Seilwinde, durch eine oder mehrere Federn und dergleichen, magnetisch, das heißt durch magnetische Anziehungs- und/oder Abstoßungskräfte, oder hydraulisch, das heißt durch eine Leistungsübertragung über eine Hydraulikflüssigkeit, erfolgen. Auch beliebige Kombinationen hieraus können vorgesehen sein, beispielsweise ein magnetohydrodynamischer Antrieb oder dergleichen.

In einer weiteren vorteilhaften Ausgestaltung der Erfindung ist vorgesehen, dass die Strömungsleiteinrichtung dazu ausgebildet ist, das mindestens eine Leitelement mittels der Antriebseinrichtung in Abhängigkeit wenigstens eines Prozessparameters aus der Gruppe Fluidströmungsgeschwindigkeit, Fluidströmungsrate, Temperatur, Bauteilgeometrie, relative Position des Beschichters zur Pulverschicht und Prozesszustand der additiven Herstellung zu bewegen. Hierdurch ist eine situationsangepasste Prozessströmungsführung realisierbar.

Weitere Vorteile ergeben sich, indem die Strömungsleiteinrichtung eine Führungseinrichtung umfasst, mittels welcher das mindestens eine Leitelement entlang eines vorgebbaren Bewegungspfads bewegbar ist. Hierdurch wird auf konstruktiv einfache Weise eine Zwangsführung des wenigstens einen Leitelements sichergestellt, wodurch die Bewegung des Leitelements oder der Leitelemente auf einen vorgebbaren oder vorgegebenen Bewegungspfad beschränkt ist.

In einer weiteren vorteilhaften Ausgestaltung der Erfindung hat es sich als vorteilhaft gezeigt, wenn die Führungseinrichtung dazu ausgebildet ist, das Leitelement rotatorisch und/oder translatorisch gegenüber der Pulverschicht zu bewegen. Mit anderen Worten ist es vorgesehen, dass das Leitelement durch die Führungseinrichtung translatorisch und/oder rotatorisch zwangsgeführt ist. Beispielsweise kann die Führungseinrichtung dazu ausgebildet sein, das Leitelement um eine Achse zu verschwenken und/oder entlang einer Führungsschiene zu bewegen, welche beispielsweise formschlüssig mit dem Leitelement gekoppelt ist.

Erfindungsgemäß ist das mindestens eine Leitelement der Strömungsleiteinrichtung innerhalb einer Prozesskammer der Schichtbauvorrichtung angeordnet.

Mit anderen Worten ist es vorgesehen, dass die Schichtbauvorrichtung eine Prozesskammer aufweist, innerhalb welcher das additive Herstellungsverfahren durchgeführt wird, und dass die gesamte Strömungsleiteinrichtung oder zumindest das wenigstens eine Leitelement der Strömungsleiteinrichtung innerhalb der Prozesskammer angeordnet ist. Hierdurch ist es möglich, das additive Herstellungsverfahren in einer kontrollierten Atmosphäre durchzuführen, indem die Prozesskammer während der additiven Herstellung teilweise oder vollständig evakuiert bzw. mit einem Schutzgas befüllt wird. Indem zumindest das Leitelement oder die Leitelemente innerhalb der Prozesskammer angeordnet ist bzw. sind, ist durch die Anordnung innerhalb der Prozesskammer weiterhin eine Prozessströmungsführung möglich.

Weitere Vorteile ergeben sich, indem das mindestens eine Leitelement an wenigstens einem Element aus der Gruppe Boden, Decke, Beschichter, Wand und Tür der Schichtbauvorrichtung angeordnet ist. Auch Kombinationen hiervon sind denkbar. Hierdurch kann das Leitelement besonders flexibel an unterschiedlichen Stellen angeordnet bzw. befestigt oder gelagert werden, wodurch den jeweiligen konstruktiven Gegebenheiten der Schichtbauvorrichtung optimal Rechnung getragen werden kann.

In einer weiteren vorteilhaften Ausgestaltung der Erfindung ist vorgesehen, dass die Strömungsleiteinrichtung unabhängig von einer Steuer- und/oder Regeleinrichtung zur Steuerung und/oder Regelung der additiven Herstellung des zumindest einen Bauteilbereichs des Bauteils durch das additive Schichtbauverfahren steuer- und/oder regelbar ist. Mit anderen Worten ist es vorgesehen, dass die Strömungsleiteinrichtung möglichst ohne Eingriff in die hard- und/oder softwaretechnisch realisierte Steuerung und/oder Regelung der Schichtbauvorrichtung betreibbar ist. Hierdurch kann die Strömungsleiteinrichtung besonders einfach und bedarfsweise integriert werden und eignet sich auch als Nachrüstlösung für bereits existierende Schichtbauvorrichtungen.

Erfindungsgemäß weist die Strömungseinrichtung zumindest eine Auslassöffnung und zumindest eine Einlassöffnung für das Fluid auf, zwischen welchen der Fluidstrom erzeugbar ist. Hierdurch kann Fluid nach dem Austritt über die Auslassöffnung über die Einlassöffnung wieder abgesaugt bzw. entfernt werden, wodurch eine zusätzliche Strömungsführung erreicht, Verunreinigungen wie verwirbeltes Werkstoffpulver, Staub, Kondensat, Rauch, Spratzer und dergleichen abgeführt und das Entstehen eines Überdrucks in einer Prozesskammer zuverlässig verhindert werden. Erfindungsgemäß sind die Auslassöffnung und die Einlassöffnung einander gegenüberliegend angeordnet sind. Hierdurch kann der Fluidstrom zumindest weitgehend ohne Umlenkung und damit weitgehend verwirbelungsfrei über die Pulverschicht geleitet und wieder abgesaugt werden.

Ein zweiter Aspekt der Erfindung betrifft ein Verfahren zum Betreiben einer Schichtbauvorrichtung gemäß dem ersten Erfindungsaspekt, bei welchem vor, während und/oder nach einer additiven Herstellung zumindest eines Bauteilbereichs eines Bauteils durch ein additives Schichtbauverfahren mittels der Strömungseinrichtung ein Fluidstrom über der Pulverschicht erzeugt und mittels des mindestens einen Leitelements der Strömungsleiteinrichtung zumindest über einen Bereich der Pulverschicht geleitet wird. Dies ermöglicht eine prozesssicherere additive Herstellung von Bauteilschichten eines Bauteils mit höherer Qualität, da die Strömungsleiteinrichtung eine verbesserte Kontrolle und Strömungsführung des Fluidstroms in der Schichtbauvorrichtung ermöglicht. Mit Hilfe des mindestens einen Leitelements ist es damit beispielsweise möglich, den Fluidstrom bedarfsweise zu homogenisieren, zu richten bzw. umzulenken und/oder zu zerstäuben. Weitere Merkmale und deren Vorteile ergeben sich aus der Beschreibung des ersten Erfindungsaspekts, wobei vorteilhafte Ausgestaltungen des ersten Erfindungsaspekts als vorteilhafte Ausgestaltungen des zweiten Erfindungsaspekts und umgekehrt anzusehen sind.

Weitere Merkmale der Erfindung ergeben sich aus den Ansprüchen, den Figuren und der Figurenbeschreibung.

Dabei zeigt:
- Fig. 1: eine schematische Perspektivansicht einer erfindungsgemäßen Schichtbauvorrichtung gemäß einem ersten Ausführungsbeispiel; und
- Fig. 2: eine schematische Perspektivansicht der erfindungsgemäßen Schichtbauvorrichtung gemäß einem zweiten Ausführungsbeispiel.

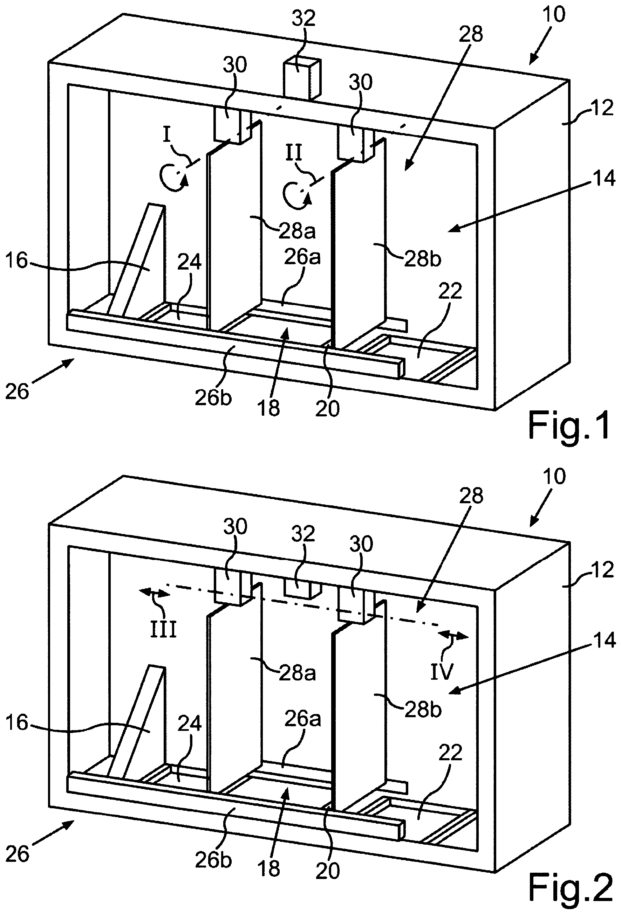

**Fig.** 1 zeigt eine schematische Perspektivansicht einer erfindungsgemäßen Schichtbauvorrichtung 10 gemäß einem ersten Ausführungsbeispiel. Die Schichtbauvorrichtung 10, welche vorliegend als selektive Lasersinter- und/oder Laserschmelzvorrichtung ausgebildet ist, weist ein Gehäuse 12 auf, welches eine Prozesskammer 14 begrenzt. Innerhalb der Prozesskammer 14 ist ein Beschichter 16 zum Auftrag von mindestens einer Pulverschicht eines Werkstoffs auf eine Aufbau- und Fügezone 18 angeordnet. Die Aufbau- und Fügezone 18 befindet sich vorliegend auf einer absenkbaren Bauplattform 20. Seitlich der Aufbau- und Fügezone 18 sind eine Dosierplattform 22 und eine Überlaufplattform 24 angeordnet. Der Beschichter 16 wird zum Auftragen einer neuen Pulverschicht in an sich bekannter Weise zwischen der Dosierplattform 22, welche neues Werkstoffpulver bereitstellt, und der Überlaufplattform 24, in welcher überschüssiges Werkstoffpulver aufgefangen wird, bewegt. Weiterhin umfasst die Schichtbauvorrichtung 10 einen Laser (nicht gezeigt) als Strahlungsquelle zum Erzeugen wenigstens eines Energiestrahls zum schichtweisen und lokalen Verschmelzen und/oder Versintern des Werkstoffs zum Ausbilden von Bauteilschichten durch selektives Bestrahlen des Werkstoffs gemäß einer vorbestimmten Belichtungsstrategie. Hierdurch können unterschiedliche Bauteile, beispielsweise Bauteile von Strömungsmaschinen wie etwa Flugtriebwerken hergestellt werden. Man erkennt weiterhin eine Strömungseinrichtung 26, mittels welcher ein Fluidstrom über der Pulverschicht im Bereich der Aufbau- und Fügezone 18 erzeugbar ist. Die Strömungseinrichtung 26 weist hierzu eine düsenartige Auslassöffnung 26a und eine gegenüber der Auslassöffnung 26a angeordnete Einlassöffnung 26b für das Fluid auf, zwischen welchen der Fluidstrom erzeugt wird. Bei aus dem Stand der Technik bekannten Schichtbauvorrichtungen existieren innerhalb der Prozesskammer 14 keine richtungsgebenden Einbauten. Nach Austritt aus der Auslassöffnung 26a stellt der Fluidstrom bei diesen herkömmlichen Schichtbauvorrichtungen einen Freistrahl dar, welcher bis zum Eintritt in die gegenüberliegende Einlassöffnung 26b keine weitere Führung erfährt. Wie in Fig. 1 zu erkennen ist, sind die Ausmaße der Prozesskammer 14 durch die Notwendigkeit von Dosier- und Überlaufplattform 22, 24 bezogen auf die Größe der Bauplattform 20 verhältnismäßig groß. Zusätzlich wird eine ausreichende Gesamthöhe der Prozesskammer 14 für die Entnahme der Bauplattform 20 mit dem oder den hergestellten Bauteilen benötigt. Der Bereich zwischen Auslassöffnung 26a und Einlassöffnung 26b beansprucht demgegenüber nur einen vergleichsweise geringen Teil des Gesamtvolumens der Prozesskammer 14.

Um eine verbesserte Prozessströmungsführung und damit höhere Bauteilqualitäten sicherzustellen, umfasst die erfindungsgemäße Schichtbauvorrichtung 10 eine Strömungsleiteinrichtung 28, welche vorliegend zwei Leitelemente 28a, 28b umfasst. Diese Leitelemente 28a, 28b dienen dazu, die Fluidströmung innerhalb der Prozesskammer 14 zu homogenisieren und zu richten und den Fluidstrom möglichst verwirbelungsarm über zumindest einen Bereich der Pulverschicht im Bereich der Aufbau- und Fügezone 18 zu leiten. Man erkennt, dass die Leitelemente 28a, 28b vorliegend wand- bzw. plattenartig ausgebildet sind. Allerdings stehen sie im direkten Verfahrweg des Beschichters 16 und sind daher mittels einer Führungseinrichtung 30 um jeweilige Achsen I, II verschwenkbar, um den Weg für den Beschichter 16 während des Auftragens einer neuen Pulverschicht freizugeben. Nach dem Auftragen der Pulverschicht werden die Leitelemente 28a, 28b zurück in die gezeigte Stellung verschwenkt, um während des Verfestigens der Pulverschicht die gewünschte Prozessströmungsführung zu gewährleisten. Die Bewegung der Leitelemente 28a, 28b wird im gezeigten Beispiel über eine steuer- und/oder regelbare Antriebseinrichtung 32 bewerkstelligt, welche im vorliegenden Beispiel exemplarisch außerhalb der Prozesskammer 14 angeordnet ist und einen elektrischen Motor umfasst.

Vorzugsweise ist die Strömungsleiteinrichtung 28 autonom bzw. teilautonom betreibbar, wodurch kein Eingriff in die Software der Schichtbauvorrichtung 10 erforderlich ist. Damit kann die Strömungsleiteinrichtung 28 auch als Nachrüstlösung für bereits existierende Schichtbauvorrichtungen verwendet werden.

Bezüglich der Ausgestaltung der Strömungsleiteinrichtung 28 bzw. der Leitelemente 28a, 28b sind grundsätzlich verschiedene Varianten denkbar, die in der folgenden Tabelle 1 aufgeführt sind. Die aufgeführten Varianten sind generell auch beliebig kombinierbar.

**Tabelle 1 - Möglichkeiten zur Ausgestaltung der Strömungsleiteinrichtung 28**

| Parameter | Ausgestaltungsvarianten | | | |
|---|---|---|---|---|
| Anordnung des oder der Leitelemente 28a, b | Starr^{∗} | Bewegbar | | |
| Verfahrart des oder der Leitelemente 28a, b | Elektrisch | Pneumatisch | Magnetisch | Seilwinde |
| | Feder | Eigengewicht | Klappmechanismus | Formschluss |
| Befestigung des oder der Leitelemente 28a, b an ... | Boden | Decke | Wand (rechts, links) | Tür |
| | Beschichter 16 | Führungsschiene | | |

| | | | | |
|---|---|---|---|---|
| ^{∗} nicht erfindungsgemäß | | | | |

**Fig.** 2 zeigt eine schematische Perspektivansicht der erfindungsgemäßen Schichtbauvorrichtung 10 gemäß einem zweiten Ausführungsbeispiel. Der grundlegende Aufbau der Schichtbauvorrichtung 10 entspricht dabei demjenigen des ersten Ausführungsbeispiels. Im Unterschied zum vorhergehenden Ausführungsbeispiel ist auch die Antriebseinrichtung 32 der Strömungsleiteinrichtung 28 innerhalb der Prozesskammer 14 angeordnet. Weiterhin sind die Leitelemente 28a, 28b vorliegend translatorisch entlang der Achsen III, IV bewegbar. Es versteht sich, dass alternativ auch sowohl translatorische als auch rotatorische Freiheitsgrade für die Bewegung der Leitelemente 28a, 28b vorgesehen sein können.

### Bezugszeichenliste:

- 10: Schichtbauvorrichtung
- 12: Gehäuse
- 14: Prozesskammer
- 16: Beschichter
- 18: Aufbau- und Fügezone
- 20: Bauplattform
- 22: Dosierplattform
- 24: Überlaufplattform
- 26: Strömungseinrichtung
- 26a: Auslassöffnung
- 26b: Einlassöffnung
- 28: Strömungsleiteinrichtung
- 28a: Leitelement
- 28b: Leitelement
- 30: Führungseinrichtung
- 32: Antriebseinrichtung
- I: Achse
- II: Achse
- III: Achse
- IV: Achse

## Patentansprüche

1. Schichtbauvorrichtung (10) zur additiven Herstellung zumindest eines Bauteilbereichs eines Bauteils durch ein additives Schichtbauverfahren, umfassend:
- mindestens einen Beschichter (16) zum Auftrag von mindestens einer Pulverschicht eines Werkstoffs auf eine Aufbau- und Fügezone (18);
- mindestens eine Strahlungsquelle zum Erzeugen wenigstens eines Energiestrahls zum schichtweisen und lokalen Verschmelzen und/oder Versintern des Werkstoffs zum Ausbilden einer Bauteilschicht durch selektives Bestrahlen des Werkstoffs mit dem wenigstens einem Energiestrahl gemäß einer vorbestimmten Belichtungsstrategie; und
- eine Strömungseinrichtung (26), mittels welcher ein Fluidstrom über der Pulverschicht erzeugbar ist, die hierzu eine düsenartige Auslassöffnung (26a) und eine gegenüber der Auslassöffnung (26a) angeordnete Einlassöffnung (26b) für das Fluid aufweist, zwischen welchen der Fluidstrom erzeugt wird
**gekennzeichnet durch**
wenigstens eine Strömungsleiteinrichtung (28), welche mindestens ein Leitelement (28a, 28b) zum Leiten des Fluidstroms über zumindest einen Bereich der Pulverschicht umfasst, wobei zumindest das mindestens eine Leitelement (28a, 28b) der Strömungsleiteinrichtung (28) innerhalb einer Prozesskammer (14) der Schichtbauvorrichtung (10) angeordnet ist, wobei das mindestens eine Leitelement (28a, 28b) wand- bzw. plattenartig ausgebildet ist, wobei das mindestens eine Leitelement (28a, 28b) senkrecht zur Pulverschicht ausgerichtet ist und wobei die Leitfläche des mindestens einen Leitelements (28a, 28b) parallel zum Fluidstrom angeordnet ist
und die Strömungsleiteinrichtung (28) eine steuer- und/oder regelbare Antriebseinrichtung (32) umfasst, mittels welcher das mindestens eine Leitelement (28a, 28b) relativ zur Pulverschicht bewegt wird, wenn es während des Auftrags einer neuen Pulverschicht im Verfahrweg des Beschichters steht.

2. Schichtbauvorrichtung (10) nach Anspruch 1,
wobei
die Antriebseinrichtung (32) elektrisch, pneumatisch, mechanisch, magnetisch und/oder hydraulisch betätigbar ist.

3. Schichtbauvorrichtung (10) nach Anspruch 1 oder 2,
wobei
die Strömungsleiteinrichtung (28) dazu ausgebildet ist, das mindestens eine Leitelement (28a, 28b) mittels der Antriebseinrichtung (32) in Abhängigkeit wenigstens eines Prozessparameters aus der Gruppe Fluidströmungsgeschwindigkeit, Fluidströmungsrate, Temperatur, Bauteilgeometrie, relative Position des Beschichters (16) zur Pulverschicht und Prozesszustand der additiven Herstellung zu bewegen.

4. Schichtbauvorrichtung (10) nach einem der Ansprüche 1 bis 3,
wobei
die Strömungsleiteinrichtung (28) eine Führungseinrichtung (30) umfasst, mittels welcher das mindestens eine Leitelement (28a, 28b) entlang eines vorgebbaren Bewegungspfads bewegbar ist.

5. Schichtbauvorrichtung (10) nach Anspruch 4,
wobei
die Führungseinrichtung (30) dazu ausgebildet ist, das mindestens eine Leitelement (28a, 28b) rotatorisch und/oder translatorisch gegenüber der Pulverschicht zu bewegen.

6. Schichtbauvorrichtung (10) nach einem der Ansprüche 1 bis 5,
wobei
das mindestens eine Leitelement (28a, 28b) an wenigstens einem Element aus der Gruppe Boden, Decke, Beschichter (16), Wand und Tür der Schichtbauvorrichtung (10) angeordnet ist.

7. Schichtbauvorrichtung (10) nach einem der Ansprüche 1 bis 6,
wobei
die Strömungsleiteinrichtung (28) unabhängig von einer Steuer- und/oder Regeleinrichtung zur Steuerung und/oder Regelung der additiven Herstellung des zumindest einen Bauteilbereichs des Bauteils durch das additive Schichtbauverfahren steuer- und/oder regelbar ist.

8. Verfahren zum Betreiben einer Schichtbauvorrichtung (10) nach einem der Ansprüche 1 bis 7, bei welchem vor, während und/oder nach einer additiven Herstellung zumindest eines Bauteilbereichs eines Bauteils durch ein additives Schichtbauverfahren mittels der Strömungseinrichtung (26) ein Fluidstrom über der Pulverschicht erzeugt und mittels des mindestens einen Leitelements (28a, 28b) der Strömungsleiteinrichtung (28) zumindest über einen Bereich der Pulverschicht geleitet wird.

## Claims

1. Layer construction apparatus (10) for the additive manufacturing of at least one component region of a component using an additive layer construction method, the apparatus comprising:
- at least one coater (16) for applying at least one powder layer of a material to a build-up and joining region (18);
- at least one radiation source for generating at least one energy beam for layer-wise and local melting and/or sintering of the material to form a component layer by selective irradiation of the material with the at least one energy beam in accordance with a predetermined exposure strategy; and
- a flow device (26) by means of which a fluid flow can be generated over the powder layer, which for this purpose has a nozzle-like outlet opening (26a) and an inlet opening (26b), arranged opposite the outlet opening (26a), for the fluid, between which openings the fluid flow is generated
**characterized by**
at least one flow guide device (28), which comprises at least one guide element (28a, 28b) for guiding the fluid flow over at least one region of the powder layer, at least the at least one guide element (28a, 28b) of the flow guide device (28) being arranged within a process chamber (14) of the layer construction apparatus (10), the at least one guide element (28a, 28b) being designed in the manner of a wall or plate, the at least one guide element (28a, 28b) being aligned perpendicularly to the powder layer and the guide surface of the at least one guide element (28a, 28b) being arranged parallel to the fluid flow and the flow guide device (28) comprising a drive device (32) which can be controlled in an open-loop and/or closed-loop manner and by means of which the at least one guide element (28a, 28b) is moved relative to the powder layer when it is in the traversing path of the coater during application of a new layer of powder.

2. Layer construction apparatus (10) according to claim 1,
wherein
the drive device (32) can be actuated electrically, pneumatically, mechanically, magnetically and/or hydraulically.

3. Layer construction apparatus (10) according to either claim 1 or claim 2,
wherein
the flow guide device (28) is designed to move the at least one guide element (28a, 28b) by means of the drive device (32) depending on at least one process parameter from the group consisting of fluid flow velocity, fluid flow rate, temperature, component geometry, relative position of the coater (16) to the powder layer and process state of the additive manufacturing.

4. Layer construction apparatus (10) according to any of claims 1 to 3, wherein
the flow guide device (28) comprises a guide device (30) by means of which the at least one guide element (28a, 28b) can be moved along a predeterminable movement path.

5. Layer construction apparatus (10) according to claim 4,
wherein
the guide device (30) is designed to move the at least one guide element (28a, 28b) in a rotational and/or translational manner in relation to the powder layer.

6. Layer construction apparatus (10) according to any of claims 1 to 5, wherein
the at least one guide element (28a, 28b) is arranged on at least one element from the group consisting of floor, ceiling, coater (16), wall and door of the layer construction apparatus (10).

7. Layer construction apparatus (10) according to any of claims 1 to 6, wherein
the flow guide device (28) can be controlled in an open-loop and/or closed-loop manner independently of an open-loop and/or closed-loop control device for open-loop and/or closed-loop control of the additive manufacturing of the at least one component region of the component by the additive layer construction method.

8. Method for operating a layer construction apparatus (10) according to any of claims 1 to 7, wherein before, during and/or after additive manufacturing of at least one component region of a component by an additive layer construction method, a fluid flow is generated over the powder layer by means of the flow device (26) and is guided at least over one region of the powder layer by means of the at least one guide element (28a, 28b) of the flow guide device (28).

## Revendications

1. Dispositif de construction en couches (10) permettant la fabrication additive d'au moins une région de pièce d'une pièce par un procédé de construction en couches additif, comprenant :
- au moins un appareil de revêtement (16) permettant d'appliquer au moins une couche de poudre d'un matériau sur une zone de montage et de jonction (18) ;
- au moins une source d'irradiation permettant de générer au moins un rayon d'énergie pour la fusion et/ou le frittage par couche et localement du matériau afin de former une couche de pièce par l'irradiation sélective du matériau avec l'au moins un rayon d'énergie selon une stratégie d'exposition prédéfinie ; et
- un système d'écoulement (26) au moyen duquel un écoulement de fluide peut être généré sur la couche de poudre, lequel système d'écoulement présente à cet effet une ouverture de sortie (26a) en forme de buse et une ouverture d'entrée (26b) opposée à l'ouverture de sortie (26a) pour le fluide, entre lesquelles est généré l'écoulement de fluide
**caractérisé par**
au moins un système de guidage d'écoulement (28) qui comprend au moins un élément de guidage (28a, 28b) permettant de guider l'écoulement de fluide sur au moins une région de la couche de poudre, au moins l'au moins un élément de guidage (28a, 28b) du système de guidage d'écoulement (28) étant disposé à l'intérieur d'une chambre de traitement (14) du dispositif de construction en couches (10), l'au moins un élément de guidage (28a, 28b) étant conçu comme une paroi ou une plaque, l'au moins un élément de guidage (28a, 28b) étant aligné perpendiculairement à la couche de poudre et la surface de guidage de l'au moins un élément de guidage (28a, 28b) étant disposée parallèlement à l'écoulement de fluide et le système de guidage d'écoulement (28) comprenant un système d'entraînement (32) pouvant être commandé et/ou régulé et au moyen duquel l'au moins un élément de guidage (28a, 28b) est déplacé par rapport à la couche de poudre lorsqu'il se trouve dans le trajet de déplacement de l'appareil de revêtement pendant l'application d'une nouvelle couche de poudre.

2. Dispositif de construction en couches (10) selon la revendication 1,
dans lequel
le système d'entraînement (32) peut être actionné électriquement, pneumatiquement, mécaniquement, magnétiquement et/ou hydrauliquement.

3. Dispositif de construction en couches (10) selon la revendication 1 ou 2,
dans lequel
le système de guidage d'écoulement (28) est conçu pour déplacer l'au moins un élément de guidage (28a, 28b) au moyen du système d'entraînement (32) en fonction d'au moins un paramètre de processus dans le groupe constitué par la vitesse d'écoulement de fluide, le débit d'écoulement de fluide, la température, la géométrie de pièce, la position relative de l'appareil de revêtement (16) par rapport à la couche de poudre et l'état de processus de la fabrication additive.

4. Dispositif de construction en couches (10) selon l'une des revendications 1 à 3, dans lequel
le système de guidage d'écoulement (28) comprend un système de direction (30) au moyen duquel l'au moins un élément de guidage (28a, 28b) peut être déplacé le long d'une trajectoire de déplacement prédéfinie.

5. Dispositif de construction en couches (10) selon la revendication 4,
dans lequel
le système de direction (30) est conçu pour déplacer l'au moins un élément de guidage (28a, 28b) en rotation et/ou en translation par rapport à la couche de poudre.

6. Dispositif de construction en couches (10) selon l'une des revendications 1 à 5, dans lequel
l'au moins un élément de guidage (28a, 28b) est disposé sur au moins un élément dans le groupe constitué par le fond, le haut, l'appareil de revêtement (16), la paroi et la porte du dispositif de construction en couches (10).

7. Dispositif de construction en couches (10) selon l'une des revendications 1 à 6, dans lequel
le système de guidage d'écoulement (28) peut être commandé et/ou régulé indépendamment d'un système de commande et/ou de régulation permettant de commander et/ou de réguler la fabrication additive de l'au moins une région de pièce de la pièce par le procédé de construction en couches additif.

8. Procédé permettant de faire fonctionner un dispositif de construction en couches (10) selon l'une des revendications 1 à 7, dans lequel avant, pendant et/ou après une fabrication additive d'au moins une région de pièce d'une pièce par un procédé de construction en couches additif, un écoulement de fluide est généré sur la couche de poudre au moyen du système d'écoulement (26) et est conduit au moins sur une région de la couche de poudre au moyen de l'au moins un élément de guidage (28a, 28b) du système de guidage d'écoulement (28).
